# EUROPÄISCHE PATENTSCHRIFT

(11) **EP 3 253 999 B1**
(45) Veröffentlichungstag und Bekanntmachung des Hinweises auf die Patenterteilung: **12.12.2018**
(21) Anmeldenummer: 16702034.6
(22) Anmeldetag: 11.01.2016
(51) Int. Cl.: F16H 59/02, B29C 45/14

(54) **VERFAHREN UND VORRICHTUNG ZUM HERSTELLEN EINES LAGERELEMENTS EINER SCHALTVORRICHTUNG FÜR EIN FAHRZEUGGETRIEBE SOWIE LAGERELEMENT UND SCHALTVORRICHTUNG FÜR EIN FAHRZEUGGETRIEBE**
METHOD AND DEVICE FOR PRODUCING A BEARING ELEMENT OF A SHIFTING DEVICE FOR A VEHICLE TRANSMISSION, AND BEARING ELEMENT AND SHIFTING DEVICE FOR A VEHICLE TRANSMISSION
PROCÉDÉ ET DISPOSITIF DE FABRICATION D'UN ÉLÉMENT DE PALIER D'UN DISPOSITIF DE CHANGEMENT DE VITESSES D'UNE TRANSMISSION DE VÉHICULE ET ÉLÉMENT DE PALIER ET DISPOSITIF DE CHANGEMENT DE VITESSES D'UNE TRANSMISSION DE VÉHICULE

(30) Priorität: 05.02.2015 DE 102015201974
(43) Veröffentlichungstag der Anmeldung: 13.12.2017
(73) Patentinhaber: ZF Friedrichshafen AG, 88046 Friedrichshafen (DE)
(72) Erfinder: RAKE, Ludger, 49439 Steinfeld (DE); GIEFER, Andreas, 49448 Lemfoerde (DE)
(86) Internationale Anmeldenummer: PCT/EP2016/050330
(87) Internationale Veröffentlichungsnummer: WO 2016/124355

(56) Entgegenhaltungen:
- DE-A1- 1 800 163
- DE-A1- 10 239 173
- DE-A1- 19 637 254
- DE-A1-102004 056 778
- US-A1- 2008 098 841
- US-A1- 2011 247 442

## Beschreibung

Die vorliegende Erfindung bezieht sich auf ein Verfahren und eine Vorrichtung zum Herstellen eines Lagerelements einer Schaltvorrichtung für ein Fahrzeuggetriebe, auf ein Lagerelement und eine Schaltvorrichtung für ein Fahrzeuggetriebe sowie auf eine Vorrichtung zum Durchführen oder Ansteuern des Verfahrens.

Ein Wählhebel zum Betätigen eines Fahrzeuggetriebes kann mit einer kardanischen Lagerung vorgesehen sein. Beispielsweise kann der Wählhebel in einem Kreuzstück beweglich gelagert sein. Dabei wird der Wählhebel üblicherweise mittels eines Rändelbolzens in dem Kreuzstück drehbeweglich gelagert. Das Kreuzstück ist in einem Gehäuse mittels einer oder mehrerer separater Buchsen zum Verbessern einer Leichtgängigkeit und zum Reduzieren eines Lagerspiels drehbeweglich gelagert. Die separaten Buchsen bedingen jedoch eine Erhöhung von Toleranzen und des Montageaufwandes. Die DE1800163A1 offenbart beispielsweise, dass zur Lagerung eines an dem Ring eines Kardangelenks angebrachten Zapfens, in einem Gehäuse eines Schaltbocks, vorzugsweise aus Kunststoff hergestellte Lagerbüchsen vorgesehen werden können.

Vor diesem Hintergrund werden mit dem hier vorgeschlagenen Ansatz ein Verfahren zum Herstellen eines Lagerelements einer Schaltvorrichtung für ein Fahrzeuggetriebe, eine Vorrichtung, die dieses Verfahren verwendet, sowie ein Lagerelement und eine Schaltvorrichtung für ein Fahrzeuggetriebe gemäß den Hauptansprüchen vorgestellt. Vorteilhafte Ausgestaltungen ergeben sich aus den Unteransprüchen und der nachfolgenden Beschreibung.

Der vorliegende Ansatz beruht auf der Erkenntnis, dass sich zueinander drehbewegliche Komponenten einer Schaltvorrichtung mittels eines gemeinsamen Verfahrens in weniger Verfahrensschritten kostengünstig herstellen lassen. Dazu bedient sich der vorliegende Ansatz dem bekannten Montagespritzgießverfahren. Das Montagespritzgießverfahren als eine Verfahrensvariante des Mehrkomponentenspritzgießverfahrens zeichnet sich durch die Möglichkeit der Herstellung beweglicher Verbindungen aus, wobei eine Prozessführung, eine Bauteilgeometrie und eine Materialauswahl jeweils Einfluss auf die resultierende Beweglichkeit haben. Diese Einflussparameter können somit zur Einstellung einer Beweglichkeit definierter Verbindungen genutzt werden. Dabei hat ein Schwindungsverhalten der jeweiligen Verbindungskomponente den größten Einfluss, wobei die Größe der Schwindungen materialbedingt und fertigungsbedingt voneinander abweichen und daher mittels geeigneter Einstellung der Einflussparameter bedarfsgerecht beeinflusst werden kann.

Basierend auf dieser Erkenntnis wird mit der vorliegenden Erfindung nach einem ersten Aspekt ein Verfahren zum Herstellen eines Lagerelements für eine Schaltvorrichtung für ein Fahrzeuggetriebe vorgeschlagen, wobei das Verfahren folgende Schritte umfasst:
Bereitstellen eines Lagerelements mit zumindest einem Vorsprung und einer Koppelstelle zum mechanischen Koppeln eines Wählhebels zum Wählen einer Schaltstellung des Fahrzeuggetriebes; und
Umspritzen des Vorsprungs mittels eines Montagespritzgießverfahrens mit einem Lagerbuchsenmaterial zum Ausbilden einer Lagerbuchse zum drehbeweglichen Lagern des Lagerelements gegenüber der Lagerbuchse.

Bei dem Fahrzeuggetriebe kann es sich beispielsweise um ein Automatikgetriebe handeln. Die Schaltvorrichtung kann mechanisch oder elektronisch mit dem Fahrgetriebe gekoppelt sein. Beispielsweise kann die Schaltvorrichtung als Komponente eines Shift-by-wire-Systems realisiert sein. Unter einem Lagerelement kann ein Bauelement verstanden werden, das mit einem Wählhebel beweglich verbunden werden kann, um eine Bewegung des Wählhebels entlang einer oder mehrerer vorgegebener Bewegungsachsen, beispielsweise einer Schaltachse zum manuellen Schalten des Getriebes und einer Wählachse zum Wählen eines Betriebsmodus des Getriebes, zu führen. Beispielsweise kann das Lagerelement als Kreuzstück ausgeführt sein. Unter einem Vorsprung kann beispielsweise ein zylinderförmiger Achsstummel verstanden werden, der der Lagerung des Lagerelements in einer entsprechenden Haltevorrichtung dient, etwa einem fest mit einer Fahrzeugkarosserie verbundenen Gehäuse oder einer Führungsschiene. Wenigstens der Vorsprung oder das Lagerelement an sich kann aus einem Kunststoff oder einem Metall gefertigt sein. Unter einem Lagerbuchsenmaterial kann ein Kunststoff verstanden werden, der mittels des Montagespritzgießverfahrens ring- oder kapselförmig um den Vorsprung gegossen werden kann. Der Kunststoff kann durch eine geeignete _Materialauswahl oder Zusatz eines Additivs zusätzlich reibungsmindernde Eigenschaften aufweisen. Unter einer Koppelstelle zum mechanischen Koppeln kann ein Verbindungelement einer Verbindung von zwei miteinander, auf mechanische Weise zu verbindenden Bauelementen verstanden werden. Beispielsweise kann die Koppelstelle eine Aufnahme zur Aufnahme eines Einbringelements oder ein Einbringelement zum Einbringen in eine Aufnahme sein.

Der vorgestellte Ansatz beruht im Einzelnen auf der Erkenntnis, dass an einem Lagerelement zum Lagern eines Wählhebels für ein Fahrzeuggetriebe Lagerbuchsen in einem Montagespritzgießverfahren angespritzt werden können, wodurch die Lagerbuchse in Bezug zu dem Lagerelement beweglich ausbildbar ist. Dadurch kann eine spielarme Lagerung mit geringen Toleranzen realisiert werden. Ferner bietet ein solches Herstellungsverfahren gegenüber herkömmlichen Lösungen den Vorteil deutlich verringerter Herstellungskosten, da die Montage der separaten Lagerbuchsen entfällt. Vorzugsweise kann der Schritt des Bereitstellens zeitgleich mit oder kurz vor dem Schritt des Umspritzens durchgeführt werden. Weiter bevorzugt wird mit dem Schritt des Bereitstellens das Lagerelement mit dem Vorsprung und der Koppelstelle ausgeformt. Weiterhin bevorzugt sind mit Bezug auf das Lagerbuchsenmaterial und das Material für den Vorsprung oder das Lagerelement die ein Schwindungsverhalten dieser Komponenten beeinflussenden Parameter für das Montagespritzgießverfahren derart gewählt, dass das Lagerbuchsenmaterial und das Material des Vorsprungs bzw. des Lagerelements unterschiedliche Schwindungen zum Erreichen des zum Herstellen der Beweglichkeit erforderlichen Spiels zwischen der Lagerbuchse und dem Vorsprung aufweisen. Eine Schwindung zeichnet sich dadurch aus, dass das entsprechende Material während des Schwindungsprozesses eine Volumenänderung erfährt, ohne dass Material entfernt oder Druck auf das Material ausgeübt wird. Beispielsweise kann abhängig von einer Werkstoffauswahl für die Lagerbuchse und für den Vorsprung bzw. für das Lagerelement sowie abhängig von einer Einspritzreihenfolge ein Aufschwinden des äußeren Lagerbuchsenmaterials, welches eine Verringerung eines Innendurchmessers der angespritzten Lagerbuchse während des Schwindungsprozesses zur Folge hat, als auch ein Wegschwinden des inneren Vorsprungmaterials, welches eine Verringerung des Außendurchmessers des Vorsprungs während des Schwindungsprozesses zur Folge hat, erreicht werden. Dadurch kann ein bedarfsgerecht ausgewähltes Spiel zwischen dem Vorsprung und der Lagerbuchse realisiert werden.

Ferner kann mit dem Schritt des Bereitstellens die Koppelstelle mit einer Aussparung zum Hindurchführen des Wählhebels durch das Lagerelement und/oder Halten des Wählhebels im Lagerelement bereitgestellt oder ausgebildet werden, wobei die Koppelstelle im Bereich der Aussparung zumindest eine Öffnung zum Aufnehmen eines Lagerbolzens des Wählhebels aufweist. Im Schritt des Umspritzens kann insbesondere das Lagerbuchsenmaterial in die Öffnung gespritzt werden, um eine Lagerschale zum Lagern des Lagerbolzens zu bilden. Mittels der Aussparung kann das Lagerelement beispielsweise rahmenartig ausgeführt werden. Unter einer Lagerschale kann ein ringförmiges Element verstanden werden, in dem der Lagerbolzen drehbar gelagert werden kann. Mittels dieser Ausführungsform lassen sich die Lagerbuchse und die Lagerschale kostengünstig und zeitsparend in ein und demselben Herstellungsverfahren fertigen. Ferner kann unter Berücksichtigung der Einflussparameter für das Schwindungsverhalten der jeweiligen verwendeten Materialien in dem Montagespritzgießverfahren das Lagerbuchsenmaterial beim Erkalten weniger stark wegschwinden als das Material des Lagerelements aufschwindet. Dadurch kann zudem die Lagerschale sehr fest in der Öffnung verklemmt werden. Beispielsweise kann eine derart erzeugte Klemmkraft ausreichen, um die Lagerschale verdrehfest in der Öffnung zu fixieren.

Das Lagerelement kann im Schritt des Bereitstellens ferner mit zumindest einem Verdrehsicherungselement bereitgestellt oder ausgebildet werden. Unter einem Verdrehsicherungselement kann beispielsweise eine in die Öffnung hineinragende Rippe oder ein gezackter Randbereich der Öffnung verstanden werden. Das Verdrehsicherungselement kann im Schritt des Umspritzens mit dem Lagerbuchsenmaterial vergossen werden, sodass sich nach dem Erkalten des Lagerbuchsenmaterials eine verdrehfeste Verbindung zwischen der Lagerschale und dem Lagerelement ergibt.

Weiterhin bevorzugt kann im Schritt des Umspritzens die Lagerbuchse mit zumindest einem am Außenumfang der Lagerbuchse angeordneten Verdrehsicherungselement ausgebildet werden, welche in eine Verdrehsicherungsaufnahme einer Lagerbuchsenaufnahme eines Gehäuses eingreift. Dadurch kann die Gefahr einer relativen Verdrehung zwischen der Lagerbuchse und dem Gehäuse wenigstens minimiert werden. Das Verdrehsicherungselement kann insbesondere wie vorstehend beschrieben ausgestaltet sein. Alternativ dazu kann das Verdrehsicherungselement eine Nut sein, in welche eine in der Lagerbuchsenaufnahme ausgeformte zugeordnete Rippe des Gehäuses eingreift.

Gemäß einer weiteren Ausführungsform kann im Schritt des Bereitstellens das Lagerelement mit zumindest einem weiteren Vorsprung bereitgestellt oder ausgebildet werden, wobei im Schritt des Umspritzens ferner der weitere Vorsprung mit dem Lagerbuchsenmaterial umspritzt wird, um eine weitere Lagerbuchse zum Lagern des Lagerelements zu bilden. Dies bietet den Vorteil, dass in ein und demselben Herstellungsschritt mehrere Lagerungspunkte an dem Lagerelement realisiert werden können.

Diese Lagerungspunkte können besonders günstig positioniert werden, wenn gemäß einer weiteren Ausführungsform im Schritt des Bereitstellens das Lagerelement derart bereitgestellt oder ausgeformt wird, dass sich der Vorsprung und der weitere Vorsprung entlang einer gemeinsamen Vorsprungsachse erstrecken. Insbesondere kann hierbei der Vorsprung an einer ersten Außenwand des Lagerelements ausgeformt werden und der weitere Vorsprung an einer der ersten Außenwand gegenüberliegenden zweiten Außenwand des Lagerelements ausgeformt werden. Dadurch lassen sich der Vorsprung und der weitere Vorsprung in einem möglichst großen Abstand zueinander anordnen, sodass sich eine möglichst große Stützbreite und somit eine sehr stabile Lagerung des Lagerelements ergibt

Der hier vorgestellte Ansatz schafft nach einem weiteren Aspekt ferner ein Lagerelement für eine Schaltvorrichtung für ein Fahrzeuggetriebe, wobei das Lagerelement zumindest einen Vorsprung und eine Koppelstelle zum mechanischen Koppeln eines Wählhebels zum Wählen einer Schaltstellung des Fahrzeuggetriebes aufweist, wobei der Vorsprung mittels eines Montagespritzgießverfahrens mit einem Lagerbuchsenmaterial zum Ausbilden einer Lagerbuchse zum Lagern des Lagerelements umspritzt ist, wodurch das Lagerelement und die Lagerbuchse zueinander drehbeweglich gelagert sind. Das Lagerelement ist vorzugsweise mittels eines Verfahrens gemäß einer der beschriebenen bevorzugten Ausführungsformen ausgebildet.

Gemäß einer Ausführungsform kann das Lagerelement zumindest einen weiteren Vorsprung aufweisen, der mit dem Lagerbuchsenmaterial umspritzt ist, um eine weitere Lagerbuchse zu bilden. Der Vorsprung und der weitere Vorsprung können sich insbesondere entlang einer gemeinsamen Vorsprungsachse erstrecken. Insbesondere kann hierbei der Vorsprung an einer ersten Außenwand des Lagerelements ausgeformt sein und der weitere Vorsprung an einer der ersten Außenwand gegenüberliegenden zweiten Außenwand des Lagerelements ausgeformt sein. Weiter bevorzugt erstrecken sich der Vorsprung und der weitere Vorsprung koaxial.

Gemäß einem weiteren Aspekt der vorliegenden Erfindung wird eine Schaltvorrichtung für ein Fahrzeuggetriebe vorgeschlagen, wobei die Schaltvorrichtung ein Lagerelement nach einer der vorstehend beschriebenen bevorzugten Ausführungsformen umfasst.

Gemäß einer weiteren Ausführungsform kann die Schaltvorrichtung mit einem Wählhebel mit zumindest einem ersten Bolzenelement und einem zweiten Bolzenelement vorgesehen sein. Die Koppelstelle kann eine Aussparung ausformen, durch die der Wählhebel hindurchgeführt sein kann. Die Koppelstelle kann im Bereich der Aussparung zumindest eine erste Öffnung und eine zweite Öffnung aufweisen. Das Lagerbuchsenmaterial kann in die erste Öffnung gespritzt sein, um eine erste Lagerschale zu bilden, und in die zweite Öffnung gespritzt sein kann, um eine zweite Lagerschale zu bilden. Das erste Bolzenelement kann in der ersten Lagerschale und das zweite Bolzenelement in der zweiten Lagerschale um eine Drehachse drehbar gelagert sein, um eine Bewegung des Wählhebels um die Drehachse zu ermöglichen. Die Bolzenelemente können verdrehfest mit dem Wählhebel verbunden sein und sich entlang der Drehachse erstrecken. Beispielsweise kann es sich bei den Bolzenelementen um Endbereiche eines durch den Wählhebel hindurchgeführten Lagerbolzens handeln, wobei die Endbereiche über den Wählhebel hinausragen.

Eine kardanische Lagerung des Wählhebels lässt sich realisieren, wenn die Vorsprungsachse und die Drehachse in unterschiedliche Richtungen orientiert sind, mit anderen Worten quer zueinander verlaufen. Beispielsweise können die Vorsprungsachse und die Drehachse senkrecht zueinander verlaufen.

Ferner schafft der vorliegende Ansatz eine Vorrichtung gekoppelt mit einem Speicher umfassend ein Programmcode zum Durchführen oder Ansteuern aller Schritte eines Verfahrens gemäß einer der vorstehend beschriebenen Ausführungsformen.

Unter einer Vorrichtung kann beispielsweise eine Maschine oder ein Werkzeug zum Durchführen eines Herstellungsverfahrens gemäß einer hier beschriebenen Ausführungsform verstanden werden. Bei dem Speicher handelt es sich vorzugsweise um einen maschinenlesbaren Datenträger wie einen Halbleiterspeicher, einen Festplattenspeicher oder einen optischen Speicher, der zur Durchführung des Verfahrens nach einer der vorstehend beschriebenen Ausführungsformen verwendet wird, wenn das Programm ausgeführt wird. Zum Ausführen des Programms kann vorzugsweise eine rechnergestützte Vorrichtung wie beispielsweise ein Computer hergenommen werden, welcher mit der Vorrichtung drahtlos beispielsweise per Bluetooth oder WLAN oder drahtgebunden beispielsweise mittels eines USB-Verbindungskabels gekoppelt sein kann. Alternativ bevorzugt kann die Vorrichtung den Speicher oder die rechnergestützte Vorrichtung mit dem Speicher aufweisen. Weiterhin alternativ bevorzugt kann der Speicher Bestandteil eines maschinenlesbaren Wechseldatenträgers sein, welcher in einem Lesegerät der Vorrichtung oder der rechnergestützten Vorrichtung wie beispielsweise einem Laufwerk wechselbar einlegbar und von diesem auslesbar ist.

Die Erfindung wird anhand der beigefügten Zeichnungen beispielhaft näher erläutert. Es zeigen:
- Fig. 1a, 1b: schematische dreidimensionale Darstellungen einer Schaltvorrichtung gemäß einem Ausführungsbeispiel der vorliegenden Erfindung;
- Fig. 2: eine schematische dreidimensionale Darstellung einer Schaltvorrichtung gemäß einem Ausführungsbeispiel der vorliegenden Erfindung;
- Fig. 3a, 3b: schematische Darstellungen einer Schaltvorrichtung gemäß einem Ausführungsbeispiel der vorliegenden Erfindung;
- Fig. 4a, 4b: schematische Querschnittsdarstellungen einer Schaltvorrichtung gemäß einem Ausführungsbeispiel der vorliegenden Erfindung;
- Fig. 5: eine schematische dreidimensionale Darstellung einer Schaltvorrichtung gemäß einem Ausführungsbeispiel der vorliegenden Erfindung;
- Fig. 6: ein Ablaufdiagramm eines Verfahrens zum Herstellen einer Schaltvorrichtung gemäß einem Ausführungsbeispiel der vorliegenden Erfindung; und
- Fig. 7: ein Blockschaltbild einer Vorrichtung zum Durchführen eines Verfahrens gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

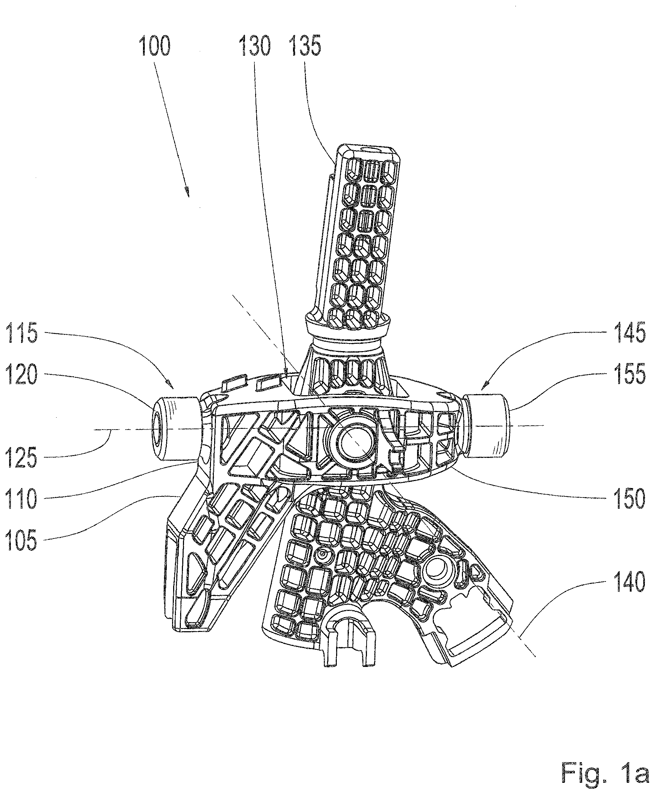

Fig. 1a zeigt eine schematische dreidimensionale Darstellung einer Schaltvorrichtung 100 gemäß einem Ausführungsbeispiel der vorliegenden Erfindung. Die Schaltvorrichtung 100 umfasst ein Lagerelement 105, das gemäß einem Ausführungsbeispiel als Kreuzstück realisiert ist. An einer ersten Außenwand 110 des Lagerelements 105 ist ein Vorsprung 115 ausgebildet. Auf dem Vorsprung 115 ist eine kapselförmige Lagerbuchse 120 angeordnet, die um eine Vorsprungsachse 125 auf dem Vorsprung 115 drehbar ist. In Fig. 1a ist der Vorsprung 115 von der Lagerbuchse 120 größtenteils abgedeckt. Die Lagerbuchse 120 ist aus einem Lagerbuchsenmaterial gefertigt, das in einem Montagespritzgießverfahren um den Vorsprung 115 gespritzt worden ist. Das Lagerbuchsenmaterial und ein Material des Lagerelements 105, und somit des Vorsprungs 115, weisen unterschiedliche Schwindungen und/oder unterschiedliche Schmelzpunkte auf, wobei das Lagerbuchsenmaterial derart beschaffen ist, dass es bei einer Materialabkühlung weniger aufschwindet als das Material des Lagerelements 105 wegschwindet. Dadurch wird erreicht, dass sich die Lagerbuchse 120 nach dem Erkalten des Lagerbuchsenmaterials mit einem bedarfsgerecht eingestellten Spiel, bei diesem Ausführungsbeispiel spielarm um den Vorsprung 115 drehen lässt.

Gemäß diesem Ausführungsbeispiel ist das Lagerelement 105 mit einer Aussparung 130 als Koppelstelle zum mechanischen Koppeln eines Wählhebels 135 ausgeführt. Durch die Aussparung 130 ist der Wählhebel 135 hindurchgeführt. Der Wählhebel 135 ist um eine Drehachse 140 drehbar in der Aussparung 130 gelagert, wobei die Drehachse 140 beispielhaft senkrecht zur Vorsprungsachse 125 verläuft.

Die Schaltvorrichtung 100 umfasst ferner einen weiteren Vorsprung 145, der an einer der ersten Außenwand 110 gegenüberliegenden zweiten Außenwand 150 des Lagerelements 105 ausgebildet ist. Auf dem weiteren Vorsprung 145 ist eine kapselförmige weitere Lagerbuchse 155 angeordnet, die ähnlich der Lagerbuchse 120 auf dem weiteren Vorsprung 145 um die Vorsprungsachse 125 drehbar ist. Der Vorsprung 120 und der weitere Vorsprung 145 erstrecken sich somit entlang der Vorsprungsachse 125. Der weitere Vorsprung 145 ist von der weiteren Lagerbuchse 155 größtenteils abgedeckt. Analog zur vorangehend beschriebenen Herstellungsweise der Lagerbuchse 120 ist auch die weitere Lagerbuchse 155 aus dem Lagerbuchsenmaterial gefertigt.

Die Lagerbuchse 120 und die weitere Lagerbuchse 155 können mit einem hier nicht dargestellten Gehäuse der Schaltvorrichtung 100, das beispielsweise fest mit einer Karosserie eines Fahrzeugs verbunden ist, verbunden sein, sodass das Lagerelement 105 um die Vorsprungsachse 125 drehbar in dem Gehäuse gelagert ist. Das Gehäuse kann beispielsweise Führungsschienen aufweisen, in denen die Lagerbuchse 120 und die weitere Lagerbuchse 155 verschiebbar angeordnet sind, sodass das Lagerelement 105 zusätzlich entlang der Drehachse 140 verschiebbar ist.

Die Lagerbuchse 120 und die weitere Lagerbuchse 155 können jeweils geschlitzt sein.

Das Lagerelement 105 und der Wählhebel 135 können mit einer Mehrzahl wabenartig angeordneter Verstrebungen ausgebildet sein, die der Versteifung des Lagerelements 105 bzw. des Wählhebels 135 dienen.

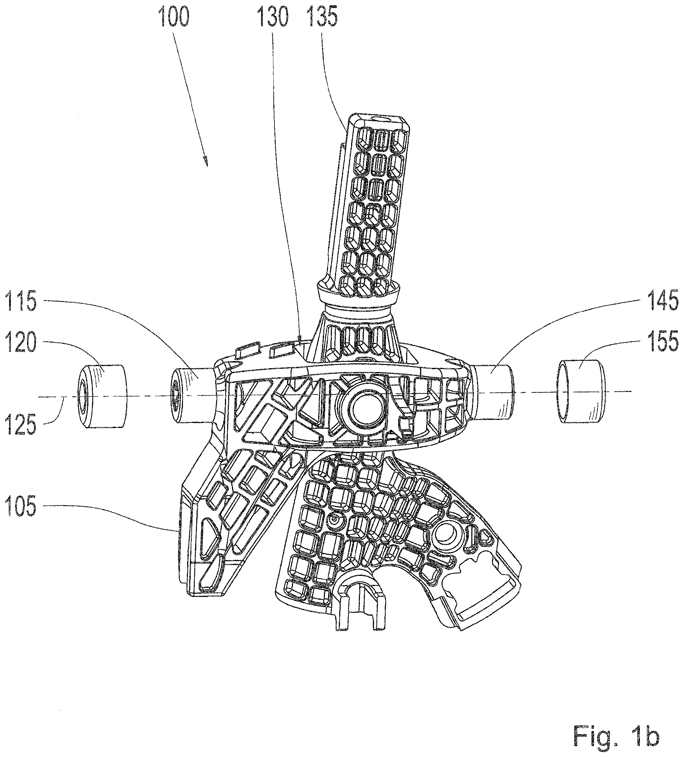

Fig. 1b zeigt die in Fig. 1a dargestellte Schaltvorrichtung 100 mit abgenommenen Lagerbuchsen 120, 155, sodass die Vorsprünge 115, 145 sichtbar sind. Der Vorsprung 115 und der weitere Vorsprung 145 sind zylinderförmig ausgeführt und weisen beispielhaft je eine parallel zur Vorsprungsachse 125 verlaufende Nut auf.

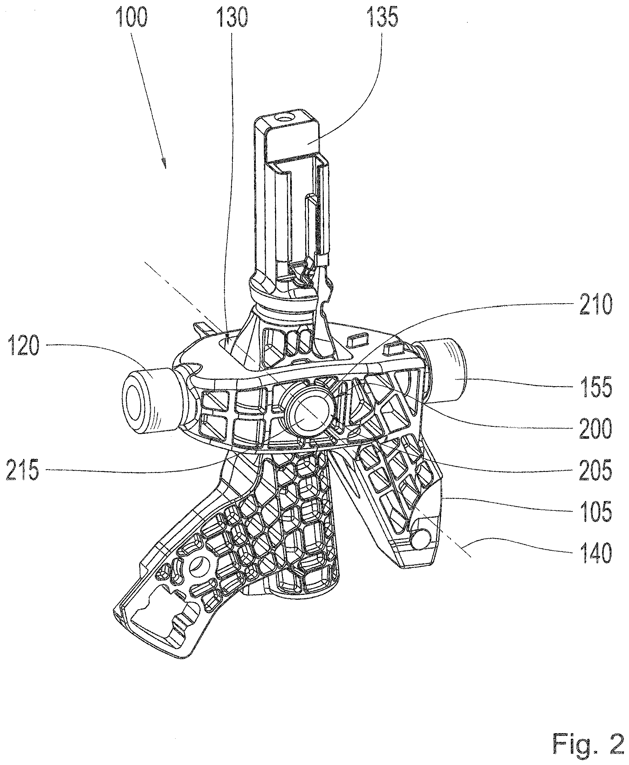

Fig. 2 zeigt eine schematische dreidimensionale Darstellung einer Schaltvorrichtung 100 gemäß einem Ausführungsbeispiel der vorliegenden Erfindung. Im Unterschied zu den Figuren 1a und 1b ist die in Fig. 2 gezeigte Schaltvorrichtung 100 zusätzlich mit einer aus dem Lagerbuchsenmaterial gespritzten Lagerschale 200 realisiert. Das Lagerelement 105 weist im Bereich der Aussparung 130 eine kreisrunde Öffnung 205 auf, wobei die Drehachse 140 durch den Mittelpunkt der Öffnung 205 verläuft. Die Lagerschale 200 sitzt in der Öffnung 205, wobei die Lagerschale 200 ähnlich wie die Lagerbuchsen 120, 155 in einem Montagespritzgießverfahren in die Öffnung 205 eingespritzt worden ist. Dadurch, dass das Material des Lagerelements 105 beim Erkalten stärker aufschwindet als das Lagerbuchsenmaterial der Lagerschale 200 wegschwindet, ist die Lagerschale 200 nach dem Erkalten verdrehfest in der Öffnung 205 eingeklemmt.

Der Wählhebel 135 ist mit einem Lagerbolzen 210 ausgeführt. Ein Endbereich 215 des Lagerbolzens 210 ist in der Lagerschale 200 um die Drehachse 140 drehbar gelagert.

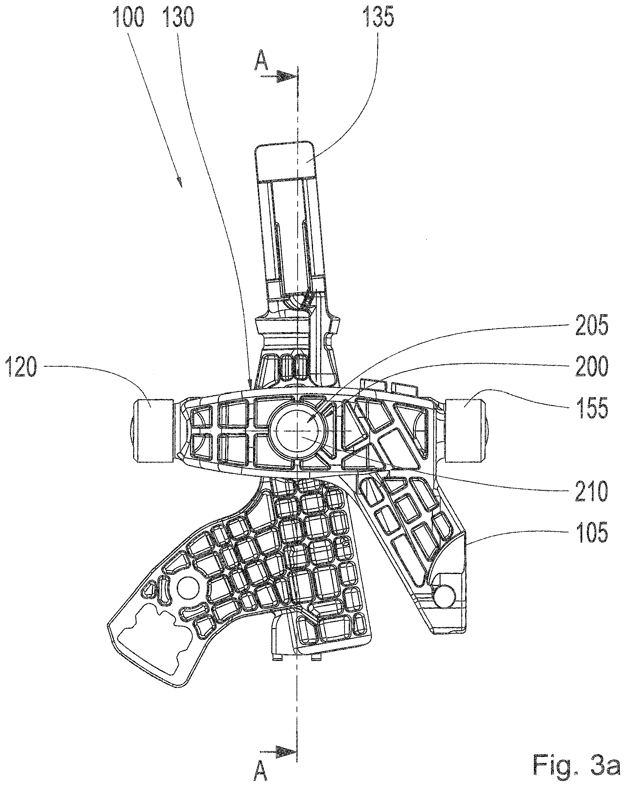

Fig. 3a zeigt eine Seitenansicht der in Fig. 2 gezeigten Schaltvorrichtung 100.

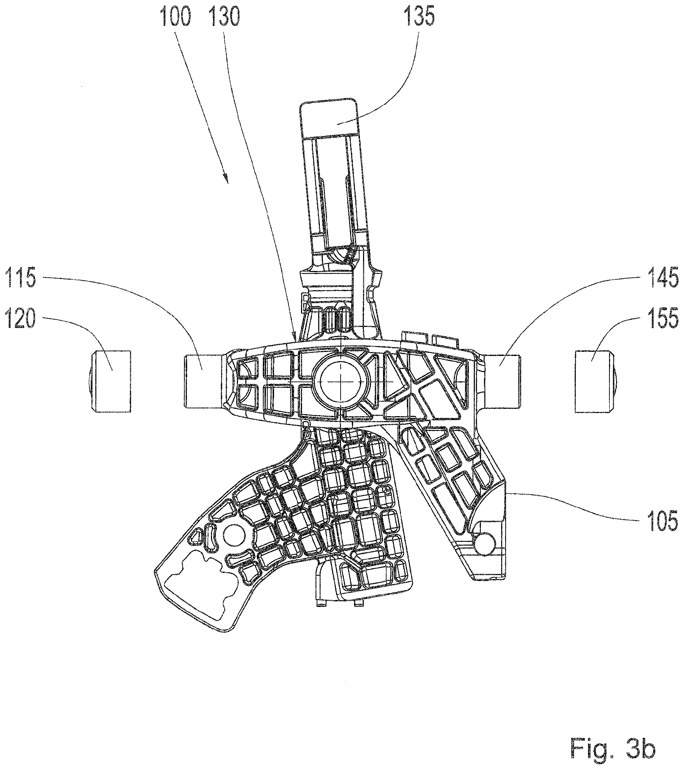

Fig. 3b zeigt eine Seitenansicht der in Fig. 2 gezeigten Schaltvorrichtung 100 mit abgenommenen Lagerbuchsen 120, 155.

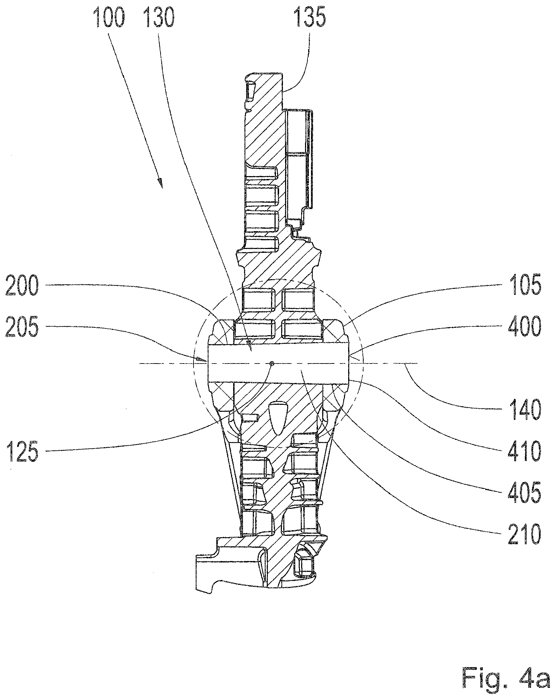

Fig. 4a zeigt eine schematische Querschnittsdarstellung einer Schaltvorrichtung 100 gemäß einem Ausführungsbeispiel der vorliegenden Erfindung. Fig. 4a zeigt einen Schnitt durch den Wählhebel 135 und das Lagerelement 105 entlang einer in Fig. 3a gezeigten Schnittachse A-A, die durch einen Schnittpunkt der Vorsprungachse 125 mit der Drehachse 140 verläuft.

Das Lagerelement 105 ist mit einer weiteren Öffnung 400 ausgeführt, die auf einer der Öffnung 205 gegenüberliegenden Seite der Aussparung 130 ausgebildet ist, sodass die Drehachse 140 durch den Mittelpunkt der Öffnung 205 und den Mittelpunkt der weiteren Öffnung 400 verläuft. Der Wählhebel 135 ist zwischen den Öffnungen 205, 400 in der Aussparung 130 angeordnet.

In der weiteren Öffnung 400 sitzt eine weitere Lagerschale 405, die wie die Lagerschale 200 aus dem Lagerbuchsenmaterial hergestellt ist und somit verdrehfest in der weiteren Öffnung 400 fixiert ist. In der weiteren Lagerschale 405 ist ein weiterer Endbereich 410 des Lagerbolzens 210 um die Drehachse 140 drehbar gelagert.

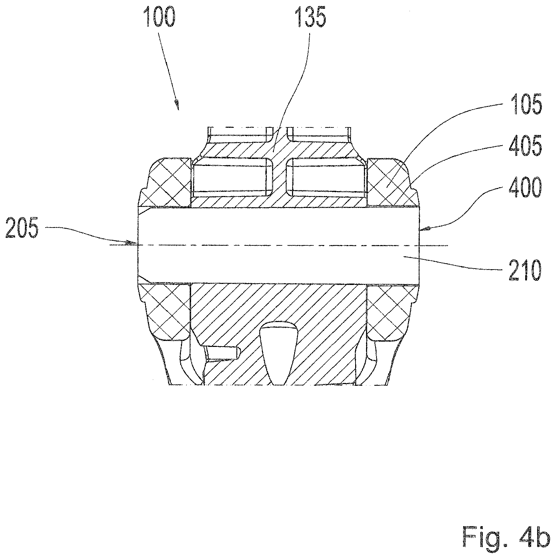

Fig. 4b zeigt eine vergrößerte Darstellung eines in Fig. 4a mit einem Kreis markierten Teilausschnitts der Schaltvorrichtung 100.

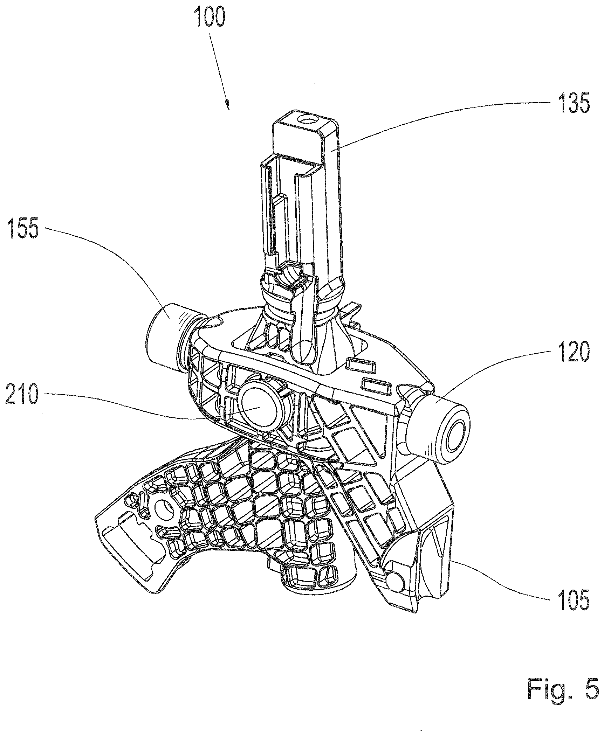

Fig. 5 zeigt eine schematische dreidimensionale Darstellung der in Fig. 3a gezeigten Schaltvorrichtung 100.

Gemäß einem Ausführungsbeispiel der vorliegenden Erfindung ist die Schaltvorrichtung 100 mit einem Kreuzstück als Lagerelement 105 realisiert. In dem Kreuzstück 105 ist der Wählhebel 135 mittels eines Rändelbolzens oder eines wie vorstehend beschriebenen Lagerbolzens 210 in Verbindung mit der Lagerschale 200 und der weiteren Lagerschale 405 gelagert. Das Kreuzstück 105 selbst ist mittels der Buchsen 120, 155 in einem Gehäuse gelagert. Das Gehäuse kann mehrteilig ausgeführt sein. Durch die Verwendung der Buchsen 120, 155 kann trotz einer Gehäuseteilung eine leichtgängige und spielarme Lagerung des Kreuzstücks 105 realisiert werden. Durch die zusätzliche Verwendung der Lagerschale 200 und der weiteren Lagerschale 405 für den Lagerbolzen 210 kann eine komplexe Baugruppe mittels des Montagespritzgießverfahren mit geringerem Aufwand und somit kostengünstig bereitgestellt bzw. ausgeformt werden.

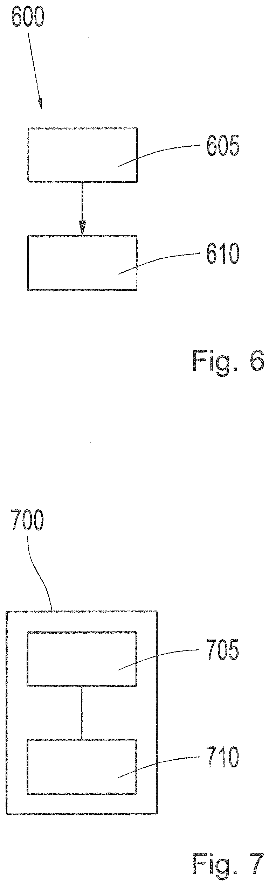

Fig. 6 zeigt ein Ablaufdiagramm eines Verfahrens 600 zum Herstellen eines Lagerelements einer Schaltvorrichtung gemäß einem Ausführungsbeispiel der vorliegenden Erfindung. In einem Schritt 605 wird ein Lagerelement bereitgestellt, das zumindest einen Vorsprung und eine Koppelstelle zum mechanischen Koppeln eines Wählhebels zum Wählen einer Schaltstellung eines Fahrzeuggetriebes. In einem weiteren Schritt 610 wird der Vorsprung mittels eines Montagespritzgießverfahrens mit einem Lagerbuchsenmaterial zum Ausbilden einer Lagerbuchse zum drehbeweglichen Lagern des Lagerelements umspritzt.

Gemäß einem Ausführungsbeispiel der vorliegenden Erfindung können damit zwei oder mehr Buchsen in einem Montagespritzgießverfahren direkt an einem Kreuzstück angespritzt werden. Hierbei wird das bekannte Verfahren zum Herstellen einer Gelenkverbindung eingesetzt. Beispielsweise kann eine drehbare Verbindung zwischen Kreuzstück und Buchsen erzeugt werden, indem Kreuzstück und Buchsen aus weitgehend unverträglichen Werkstoffen mit unterschiedlichen Schmelzpunkten und unterschiedlichen Schwindungen hergestellt werden. Durch eine geeignete Werkstoffkombination ergibt sich nach der Entformung eine spielarme und leicht bewegliche Verbindung. Beispielsweise kann das Kreuzstück aus einem Polyamid wie PA6 GF und die Buchsen aus Polybutylenterephthalat (PBT) gefertigt werden. Alternativ kann auch eine Werkstoffkombination aus Kunststoff und Metall verwendet werden.

Direkt an den Buchsen können Bereiche für eine Verdreh- und Verliersicherung oder auch Spielausgleichselemente angespritzt werden.

Gemäß einem Ausführungsbeispiel kann eine kardanische Lagerung des Wählhebels komplett im Montagespritzguss realisiert werden. Hierbei können am Kreuzstück neben den beiden Buchsen zur Lagerung im Gehäuse zusätzlich zwei Lagerschalen für die Wählhebellagerung angespritzt werden. Somit ist es möglich, eine komplexe Baugruppe quasi in einem Arbeitsgang herzustellen.

Fig. 7 zeigt ein Blockschaltbild einer Vorrichtung 700 zum Durchführen eines Verfahrens gemäß einem Ausführungsbeispiel der vorliegenden Erfindung. Die Vorrichtung 700 umfasst eine Einheit 705 zum Bereitstellen eines Lagerelements, das zumindest einen Vorsprung und eine Koppelstelle zum mechanischen Koppeln eines Wählhebels zum Wählen einer Schaltstellung des Fahrzeuggetriebes aufweist. Des Weiteren umfasst die Vorrichtung 700 eine Einheit 710 zum Umspritzen des Vorsprungs mittels eines Montagespritzgießverfahrens mit einem Lagerbuchsenmaterial zum Ausbilden einer Lagerbuchse zum drehbeweglichen Lagern des Lagerelements. Durch bedarfsgerechte Einstellung der Einflussparameter für das Montagespritzgießverfahren kann beispielsweise das Schwindungsverhalten des Lagerbuchsenmaterials derart gewählt sein, dass das Lagerbuchsenmaterial in einem solchen Maß aufschwindet, dass die Lagerbuchse relativ drehbeweglich zu dem Lagerelement ausgeformt wird. Weiter bevorzugt können das Schwindungsverhalten des Lagerbuchsenmaterials und des Materials für das Lagerelement bei gleichzeitigen Ausbilden des Lagerelements und der Lagerbuchse derart gewählt sein, dass das Lagerbuchsenmaterial weniger aufschwindet als das Material des Lagerelements wegschwindet. Dadurch kann gleichfalls eine vorbestimmt definierbare Beweglichkeit bzw. Spiel zwischen Lagerelement und Lagerbuchse erzielt werden.

Bei den Einheiten 705, 710 kann es sich beispielsweise um Spritzgießwerkzeuge zur Durchführung des Montagespritzgießverfahrens handeln, um das Lagerelement und die Lagerbuchse zueinander relativ drehbeweglich herzustellen

### Bezugszeichen

- 100: Schaltvorrichtung
- 105: Lagerelement
- 110: erste Außenwand
- 115: Vorsprung
- 120: Lagerbuchse
- 125: Vorsprungsachse
- 130: Aussparung
- 135: Wählhebel
- 140: Drehachse
- 145: weiterer Vorsprung
- 150: zweite Außenwand
- 155: weitere Lagerbuchse
- 200: Lagerschale
- 205: Öffnung
- 210: Lagerbolzen
- 215: erstes Bolzenelement, auch Endbereich genannt
- 400: weitere Öffnung
- 405: weitere Lagerschale
- 410: zweites Bolzenelement, auch weiterer Endbereich genannt
- 600: Verfahren zum Herstellen einer Schaltvorrichtung
- 605: Bereitstellen des Lagerelements
- 610: Umspritzen des Vorsprungs des Lagerelements
- 700: Vorrichtung
- 705: Einheit zum Bereitstellen des Lagerelements
- 710: Einheit zum Umspritzen des Vorsprungs des Lagerelements

## Patentansprüche

1. Verfahren (600) zum Herstellen eines Lagerelements einer Schaltvorrichtung (100) für ein Fahrzeuggetriebe, wobei das Verfahren (600) folgende Schritte umfasst
Bereitstellen (605) eines Lagerelements (105) mit zumindest einem Vorsprung (115) und einer Koppelstelle (130, 205) zum mechanischen Koppeln eines Wählhebels (135) zum Wählen einer Schaltstellung des Fahrzeuggetriebes; **gekennzeichnet durch** den Schritt: Umspritzen (610) des Vorsprungs (115) mittels eines Montagespritzgießverfahrens mit einem Lagerbuchsenmaterial zum Ausbilden einer Lagerbuchse (120) zum drehbeweglichen Lagern des Lagerelements (105) gegenüber der Lagerbuchse (120).

2. Verfahren (600) gemäß Anspruch 1, **dadurch gekennzeichnet, dass** im Schritt des Bereitstellens (605) der Vorsprung (115) oder das Lagerelement (105) aus einem Kunststoffmaterial oder Metall ausgebildet ist, und im Schritt des Umspritzens (610) ein Kunststoffmaterial als Lagerbuchsenmaterial verwendet wird.

3. Verfahren (600) gemäß einem der vorangegangenen Ansprüche, **dadurch gekennzeichnet, dass** im Schritt des Bereitstellens (605) die Koppelstelle (130, 205) mit einer Aussparung (130) zum Hindurchführen des Wählhebels (135) durch das Lagerelement (105) und/oder Halten des Wählhebels (135) im Lagerelement (105) bereitgestellt wird, wobei die Koppelstelle (130, 205) im Bereich der Aussparung (130) zumindest eine Öffnung (205) zum Aufnehmen eines Lagerbolzens (210) des Wählhebels (135) aufweist, insbesondere wobei im Schritt des Umspritzens (610) das Lagerbuchsenmaterial ferner in die Öffnung (205) gespritzt wird, um eine Lagerschale (200) zum drehbeweglichen Lagern des Lagerbolzens (210) zu bilden.

4. Verfahren (600) gemäß einem der vorangegangenen Ansprüche, **dadurch gekennzeichnet, dass** im Schritt des Bereitstellens (605) das Lagerelement (105) mit zumindest einem weiteren Vorsprung (145) bereitgestellt wird, wobei im Schritt des Umspritzens (610) ferner der weitere Vorsprung (145) mit dem Lagerbuchsenmaterial umspritzt wird, um eine weitere Lagerbuchse (155) zum Lagern des Lagerelements (105) zu bilden.

5. Verfahren (600) gemäß Anspruch 4, **dadurch gekennzeichnet, dass** im Schritt des Bereitstellens (605) das Lagerelement (105) derart ausgeformt wird, dass sich der Vorsprung (115) und der weitere Vorsprung (145) entlang einer gemeinsamen Vorsprungsachse (125) erstrecken, insbesondere wobei der Vorsprung (115) an einer ersten Außenwand (110) des Lagerelements (105) ausgeformt wird und der weitere Vorsprung (145) an einer der ersten Außenwand (110) gegenüberliegenden zweiten Außenwand (150) des Lagerelements (105) ausgeformt wird.

6. Lagerelement (105) für eine Schaltvorrichtung (100) für ein Fahrzeuggetriebe, wobei das Lagerelement (105) zumindest einen Vorsprung (115) und eine Koppelstelle (130, 205) zum mechanischen Koppeln eines Wählhebels (135) zum Wählen einer Schaltstellung des Fahrzeuggetriebes aufweist, **dadurch gekennzeichnet, dass** der Vorsprung (115) mittels eines Montagespritzgießverfahrens mit einem Lagerbuchsenmaterial zum Ausbilden einer Lagerbuchse (120) zum Lagern des Lagerelements (105) umspritzt ist, wodurch das Lagerelement (105) und die Lagerbuchse (120) zueinander drehbeweglich angeordnet sind.

7. Lagerelement (105) gemäß Anspruch 6, **dadurch gekennzeichnet, dass** das Lagerelement (105) zumindest einen weiteren Vorsprung (145) aufweist, der mit dem Lagerbuchsenmaterial umspritzt ist, um eine weitere Lagerbuchse (155) zu bilden, insbesondere wobei sich der Vorsprung (115) und der weitere Vorsprung (145) entlang einer gemeinsamen Vorsprungsachse (125) erstrecken, insbesondere wobei der Vorsprung (115) an einer ersten Außenwand (110) des Lagerelements (105) ausgeformt ist und der weitere Vorsprung (145) an einer der ersten Außenwand (110) gegenüberliegenden zweiten Außenwand (150) des Lagerelements (105) ausgeformt ist.

8. Schaltvorrichtung (100) für ein Fahrzeuggetriebe, wobei die Schaltvorrichtung (100) ein Lagerelement (105) nach Anspruch 6 oder 7 umfasst, **gekennzeichnet durch** einen Wählhebel (135) mit zumindest einem ersten Bolzenelement (215) und einem zweiten Bolzenelement (410), wobei die Koppelstelle (130, 205) eine Aussparung ausformt, wobei der Wählhebel (135) durch die Aussparung (130) hindurchgeführt ist, wobei die Koppelstelle (130, 205) im Bereich der Aussparung (130) zumindest eine erste Öffnung (205) und eine zweite Öffnung (400) aufweist, wobei das Lagerbuchsenmaterial in die erste Öffnung (205) gespritzt ist, um eine erste Lagerschale (200) zu bilden, und das Lagerbuchsenmaterial in die zweite Öffnung (400) gespritzt ist, um eine zweite Lagerschale (405) zu bilden, und wobei das erste Bolzenelement (215) in der ersten Lagerschale (200) und das zweite Bolzenelement (410) in der zweiten Lagerschale (405) um eine Drehachse (140) drehbar gelagert ist, um eine Bewegung des Wählhebels (135) um die Drehachse (140) zu ermöglichen.

9. Schaltvorrichtung (100) gemäß Anspruch 8, **dadurch gekennzeichnet, dass** das Lagerelement (105) ein Lagerelement (105) gemäß Anspruch 7 ist, dass sich der Vorsprung (115) und der weitere Vorsprung (145) entlang der gemeinsamen Vorsprungsachse (125) erstrecken, und dass die Vorsprungsachse (125) und die Drehachse (140) quer, insbesondere orthogonal zueinander verlaufen.

10. Vorrichtung (700) gekoppelt mit einem Speicher umfassend ein Programmcode zum Durchführen oder Ansteuern aller Schritte eines Verfahrens (600) gemäß einem der Ansprüche 1 bis 5.

11. Vorrichtung nach Anspruch 10, **dadurch gekennzeichnet, dass** die Vorrichtung zum Durchführen oder Ansteuern aller Schritte des Verfahrens (600) gemäß einem der Ansprüche 1 bis 5 ausgebildet ist.

## Claims

1. Method (600) for producing a bearing element of a shift device (100) for a vehicle transmission, wherein the method (600) comprises the following steps:
providing (605) a bearing element (105) having at least one projection (115) and having a coupling point (130, 205) for the mechanical coupling of a selector lever (135) for the selection of a shift position of the vehicle transmission; **characterized by** the step: encapsulating (610) the projection (115), by means of an assembly injection moulding process, with a bearing bushing material to form a bearing bushing (120) for the rotatable mounting of the bearing element (105) relative to the bearing bushing (120).

2. Method (600) according to Claim 1, **characterized in that**, in the step of providing (605), the projection (115) or the bearing element (105) is formed from a plastics material or metal, and in the step of encapsulating (610), a plastics material is used as bearing bushing material.

3. Method (600) according to any of the preceding claims, **characterized in that**, in the step of providing (605), the coupling point (130, 205) is provided with an aperture (130) for the leadthrough of the selector lever (135) through the bearing element (105) and/or for holding the selector lever (135) in the bearing element (105), wherein the coupling point (130, 205) has, in the region of the aperture (130), at least one opening (205) for receiving a bearing bolt (210) of the selector lever (135), wherein, in particular, in the step of encapsulating (610), the bearing bushing material is furthermore injected into the opening (205) in order to form a bearing shell (200) for the rotatable mounting of the bearing bolt (210).

4. Method (600) according to any of the preceding claims, **characterized in that**, in the step of providing (605), the bearing element (105) is provided with at least one further projection (145), wherein, in the step of encapsulating (610), the further projection (145) is also encapsulated with the bearing bushing material in order to form a further bearing bushing (155) for the mounting of the bearing element (105).

5. Method (600) according to Claim 4, **characterized in that**, in the step of providing (605), the bearing element (105) is formed such that the projection (115) and the further projection (145) extend along a common projection axis (125), wherein, in particular, the projection (115) is formed at a first outer wall (110) of the bearing element (105) and the further projection (145) is formed at a second outer wall (150), situated opposite the first outer wall (110), of the bearing element (105).

6. Bearing element (105) for a shift device (100) for a vehicle transmission, wherein the bearing element (105) has at least one projection (115) and one coupling point (130, 205) for the mechanical coupling of a selector lever (135) for the selection of a shift position of the vehicle transmission, **characterized in that** the projection (115) is encapsulated, by means of an assembly injection moulding process, with a bearing bushing material to form a bearing bushing (120) for the mounting of the bearing element (105), whereby the bearing element (105) and the bearing bushing (120) are arranged so as to be rotatable relative to one another.

7. Bearing element (105) according to Claim 6, **characterized in that** the bearing element (105) has at least one further projection (145) which is encapsulated with the bearing bushing material in order to form a further bearing bushing (155), wherein, in particular, the projection (115) and the further projection (145) extend along a common projection axis (125), wherein, in particular, the projection (115) is formed at a first outer wall (110) of the bearing element (105) and the further projection (145) is formed at a second outer wall (150), situated opposite the first outer wall (110), of the bearing element (105) .

8. Shift device (100) for a vehicle transmission, wherein the shift device (100) comprises a bearing element (105) according to Claim 6 or 7, **characterized by** a selector lever (135) having at least one first bolt element (215) and one second bolt element (410), wherein the coupling point (130, 205) forms an aperture, wherein the selector lever (135) is led through the aperture (130), wherein the coupling point (130, 205) has, in the region of the aperture (130), at least one first opening (205) and one second opening (400), wherein the bearing bushing material is injected into the first opening (205) in order to form a first bearing shell (200), and the bearing bushing material is injected into the second opening (400) in order to form a second bearing shell (405), and wherein the first bolt element (215) is mounted in the first bearing shell (200), and the second bolt element (410) is mounted in the second bearing shell (405), so as to be rotatable about an axis of rotation (140) in order to permit a movement of the selector lever (135) about the axis of rotation (140).

9. Shift device (100) according to Claim 8, **characterized in that** the bearing element (105) is a bearing element (105) according to Claim 7, **in that** the projection (115) and the further projection (145) extend along the common projection axis (125), and **in that** the projection axis (125) and the axis of rotation (140) run transversely, in particular orthogonally, with respect to one another.

10. Device (700) coupled to a memory comprising program code for carrying out or actuating all of the steps of a method (600) according to any of Claims 1 to 5.

11. Device according to Claim 10, **characterized in that** the device is configured for carrying out or actuating all of the steps of the method (600) according to any of Claims 1 to 5.

## Revendications

1. Procédé (600) de fabrication d'un élément de palier d'un dispositif de changement de vitesses (100) d'une boîte de vitesses de véhicule, le procédé (600) comprenant les étapes suivantes :
fournir (605) un élément de palier (105) comprenant au moins une saillie (115) et un point d'accouplement (130, 205) servant à l'accouplement mécanique d'un levier de sélection (135) servant à sélectionner une position de changement de vitesse de la boîte de vitesses de véhicule ; **caractérisé par** l'étape consistant à : enrober par injection (610) la saillie (115), par un procédé de moulage par injection de montage, avec une matière de coussinet de palier pour former un coussinet de palier (120) servant au montage mobile en rotation de l'élément de palier (105) par rapport au coussinet de palier (120).

2. Procédé (600) selon la revendication 1, **caractérisé en ce que**, pendant l'étape de fourniture (605), la saillie (115) ou l'élément de palier (105) est formé(e) à partir d'une matière plastique ou à partir de métal et, pendant l'étape d'enrobage par injection (610), une matière plastique est utilisée comme matière de coussinet de palier.

3. Procédé (600) selon l'une quelconque des revendications précédentes, **caractérisé en ce que**, pendant l'étape de fourniture (605), le point d'accouplement (130, 205) est doté d'un évidement (130) servant à guider le levier de sélection (135) à travers l'élément de palier (105) et/ou à retenir le levier de sélection (135) dans l'élément de palier (105), le point d'accouplement (130, 205) comprenant, dans la région de l'évidement (130), au moins une ouverture (205) destinée à recevoir un tourillon de palier (210) du levier de sélection (135), en particulier pendant l'étape d'enrobage par injection (610), la matière de coussinet de palier étant en outre injectée dans l'ouverture (205) afin de former une coquille de coussinet (200) servant au montage mobile en rotation du tourillon de palier (210).

4. Procédé (600) selon l'une quelconque des revendications précédentes, **caractérisé en ce que**, pendant l'étape de fourniture (605), l'élément de palier (105) est doté d'au moins une autre saillie (145), pendant l'étape d'enrobage par injection (610), l'autre saillie (145) étant en outre enrobée par injection avec de la matière de coussinet de palier, afin de former un autre coussinet de palier (155) servant au montage de l'élément de palier (105).

5. Procédé (600) selon la revendication 4, **caractérisé en ce que**, pendant l'étape de fourniture (605), l'élément de palier (105) est façonné de telle sorte que la saillie (115) et l'autre saillie (145) s'étendent le long d'un axe de saillie commun (125), la saillie (115) étant en particulier façonnée sur une première paroi extérieure (110) de l'élément de palier (105) et l'autre saillie (145) étant façonnée sur une deuxième paroi extérieure (150), opposée à la première paroi extérieure (110), de l'élément de palier (105).

6. Élément de palier (105) pour un dispositif de changement de vitesses (100) d'une boîte de vitesses de véhicule, l'élément de palier (105) comprenant au moins une saillie (115) et un point d'accouplement (130, 205) servant à l'accouplement mécanique d'un levier de sélection (135) servant à sélectionner une position de changement de vitesse de la boîte de vitesses de véhicule ; **caractérisé en ce que** la saillie (115) est enrobée par injection, par un procédé de moulage par injection de montage, avec une matière de coussinet de palier pour former un coussinet de palier (120) servant au montage de l'élément de palier (105), de telle sorte que l'élément de palier (105) et le coussinet de palier (120) soient disposés de manière mobile en rotation l'un par rapport à l'autre.

7. Élément de palier (105) selon la revendication 6, **caractérisé en ce que** l'élément de palier (105) comprend au moins une autre saillie (145) qui est enrobée par injection avec la matière de coussinet de palier afin de former un autre coussinet de palier (155), la saillie (115) et l'autre saillie (145) s'étendant en particulier le long d'un axe de saillie commun (125), la saillie (115) étant en particulier façonnée sur une première paroi extérieure (110) de l'élément de palier (105) et l'autre saillie (145) étant façonnée sur une deuxième paroi extérieure (150), opposée à la première paroi extérieure (110), de l'élément de palier (105).

8. Dispositif de changement de vitesses (100) pour une boîte de vitesses de véhicule, le dispositif de changement de vitesses (100) comportant un élément de palier (105) selon la revendication 6 ou 7, **caractérisé par** un levier de sélection (135) comprenant au moins un premier élément tourillon (215) et un deuxième élément tourillon (410), le point d'accouplement (130, 205) formant un évidement, le levier de sélection (135) étant guidé à travers l'évidement (130), le point d'accouplement (130, 205) comprenant, dans la région de l'évidement (130), au moins une première ouverture (205) et une deuxième ouverture (400), la matière de coussinet de palier étant injectée dans la première ouverture (205), afin de former une première coquille de coussinet (200), et la matière de coussinet de palier étant injectée dans la deuxième ouverture (400), afin de former une deuxième coquille de coussinet (405), et le premier élément tourillon (215) étant monté dans la première coquille de coussinet (200) de manière à pouvoir tourner autour d'un axe de rotation (140) et le deuxième élément tourillon (410) étant monté dans la deuxième coquille de coussinet (405) de manière à pouvoir tourner autour de cet axe de rotation, afin de permettre un déplacement du levier de sélection (135) autour de l'axe de rotation (140).

9. Dispositif de changement de vitesses (100) selon la revendication 8, **caractérisé en ce que** l'élément de palier (105) est un élément de palier (105) selon la revendication 7, **en ce que** la saillie (115) et l'autre saillie (145) s'étendent le long de l'axe de saillie commun (125), et **en ce que** l'axe de saillie (125) et l'axe de rotation (140) s'étendent transversalement, en particulier perpendiculairement, l'un par rapport à l'autre.

10. Dispositif (700) couplé à une mémoire comportant un code de programme servant à mettre en oeuvre ou à commander toutes les étapes d'un procédé (600) selon l'une quelconque des revendications 1 à 5.

11. Dispositif selon la revendication 10, **caractérisé en ce que** le dispositif est conçu pour mettre en oeuvre ou commander toutes les étapes du procédé (600) selon l'une quelconque des revendications 1 à 5.
